# EUROPÄISCHE PATENTSCHRIFT

(11) **EP 1 746 000 B1**
(45) Veröffentlichungstag und Bekanntmachung des Hinweises auf die Patenterteilung: **29.02.2012**
(21) Anmeldenummer: 06015221.2
(22) Anmeldetag: 21.07.2006
(51) Int. Cl.: B60T 8/17, B61C 15/14, B60L 3/10

(54) **Schienenfahrzeug mit Mitteln zur Überwachung des Haftwerts Rad-Schiene**
Rail vehicle comprising means for monitoring the wheel-rail adhesion value
Véhicule ferroviaire comportant des moyens de surveillance de l'adhésion rail-roue

(30) Priorität: 21.07.2005 DE 102005034056
(43) Veröffentlichungstag der Anmeldung: 24.01.2007
(73) Patentinhaber: KNORR-BREMSE Systeme für Schienenfahrzeuge GmbH, 80809 München (DE)
(72) Erfinder: Knoss, Rainer, 80637 München (DE)
(74) Vertreter: Mattusch, Gundula

(56) Entgegenhaltungen:
- EP-A- 1 110 798
- DE-A1- 1 780 214
- DE-A1- 2 754 504
- DE-A1- 3 902 846
- DE-U1- 20 216 460

## Beschreibung

Die Erfindung betrifft ein Schienenfahrzeug mit mindestens einem Antriebsaggregat, das auf mehrere Achsen angeordnete Radpaare antreibt, die auf einer ortsfesten Schiene laufen.

Ein Schienenfahrzeug mit den im Oberbegriff von Anspruch 1 definierten Merkmalen ist aus der DE-U-202 16 460 bekannt.

Das Einsatzgebiet der vorliegenden Erfindung erstreckt sich auf den gesamten Schienenfahrzeugbau, insbesondere auf Schienenfahrzeuge für den öffentlichen Nah- und Fernverkehr sowie auf Schienenfahrzeuge zum Transport von Gütern. Aus dem allgemeinen Stand der Technik gehen Schienenfahrzeuge der hier interessierenden Art hinlänglich hervor. Bei Schienenfahrzeugen ergibt sich insbesondere im Herbst das Problem, dass durch Laubblätter, welche auf die Schiene fallen, ein Schmierbelag hierauf entsteht, der die erforderliche Bremsleistung des Schienenfahrzeuges beeinträchtigt. Denn die Schiene kann hierdurch so glatt werden, dass die hierauf laufenden Räder beim Bremsen durchrutschen. Auch andere Verunreinigungen auf der Lauffläche von Schienen - wie beispielsweise Kohlestaub - können zu dem besagten Problem führen.

Aufgrund rutschiger Schienen müssen aus Sicherheitsgründen die Fahrzeuge langsamer fahren, wodurch Fahrpläne nicht gehalten werden können. Im Herbst ist es daher manchmal erforderlich, den Fahrbetrieb entsprechend eines speziellen Herbstfahrplanes durchzuführen, der mehrere Zugverbände vorsieht, um trotz Langsamfahrt eine möglichst optimale Beförderung von Personen und Gütem zu organisieren. Dies führt jedoch zu einem erhöhten Aufwand an zu betreibenden Schienenfahrzeugen und Bedienungspersonal. In Extremfällen kann es aufgrund rutschiger Schienen an Bahnhöfen auch zu Bahnsteigüberfahrungen kommen. Eine Bahnsteigüberfahrung äußert sich dadurch, dass der Zug erst nach dem Bahnsteig zum Halten kommt. Hierbei ist es erforderlich, dass dieser zurückzufahren ist, was eine weitere Ursache zeitlicher Verzögerungen ist. Des Weiteren kann es auch zu Signalüberfahrungen kommen, so dass der Zug in einen gesperrten Schienenabschnitt geraten kann, was zu einem entsprechenden Unfallpotential führt.

Eine technischer Nachteil bei der vorstehend aufgezeigten Problematik resultiert daraus, dass eine rutschige Schiene von Schienenfahrzeugführer erst dann bemerkt wird, wenn dieser eine Bremsung einleitet und die erwartete Bremswirkung vermisst.

Es ist zwar denkbar, den Schmierbelag von den Schienen durch entsprechende Reinigungen in kurzen Zeitintervallen zu entfernen, dies führt jedoch zu einem recht hohen Wartungsaufwand. Zum Anderen wäre es denkbar, die Bremskraft des Schienenfahrzeugs auf extrem niedere Haftwerte auszulegen, wozu jedoch die Schienenfahrzeuge mit extrem überdimensionierten Bremsen auszurüsten wären, welche jedoch nur wenige Wochen im Jahr - nämlich im Herbst - benötigt werden würden.

Es ist daher die Aufgabe der vorliegenden Erfindung, ein Schienenfahrzeug des Standes der Technik dahingehend zu verbessern, dass dieses einen die Bremsung beeinträchtigenden Schmierbelag unmittelbar erkennt, um eine unmittelbare Beseitigung desselben zu veranlassen.

Die Aufgabe wird ausgehend von einem Schienenfahrzeug gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass sich die von dem mindestens einem Antriebsaggregat des Schienenfahrzeugs erzeugte Antriebsleistung unterschiedlich stark auf die angetriebenen Radpaare verteilt, wobei bei mindestens einem relativ stärker angetriebenen Radpaar Mittel zur Überwachung des Haftwertes Rad-Schiene vorgesehen sind, um einen auf der Schiene befindlichen und die Bremsung beeinträchtigenden Schmierbelag zu erkennen.

Der Vorteil der erfindungsgemäßen Lösung besteht insbesondere darin, dass die sowieso benötigte Antriebsleistung des Antriebsaggregats herangezogen wird zur Überwachung des Haftwertes. Somit werden aufwendige zusätzliche gerätetechnische Einrichtungen vermieden. Die Erfindung beruht auf der Erkenntnis, dass bei Verteilung der Antriebskraft auf möglichst wenige Radpaare ein Schmierbelag auf der Schiene schon bei geringen Antriebsleistungen, also schon bei normaler Fahrt durch entsprechend verminderte Haftwerte auffällt. Da die Antriebsleistung des Antriebsaggregats bekannt ist, kann genau ermittelt werden, wie groß der aktuelle Haftwert zwischen Rad und Schiene ist. Werden dagegen alle Radpaare in herkömmlicher Weise gleichmäßig angetrieben, ist ein Schmierbelag auf der Schiene erst dann durch eine entsprechende Verminderung des Haftwerts erkennbar, wenn das Schienenfahrzeug beim Beschleunigen die volle Antriebsleistung einsetzt. Mit der erfindungsgemäßen Lösung kann dagegen ein gefährlicher Schmierbelag schnell erkannt werden. Zum Ermitteln des Haftwerts Rad-Schiene werden diejenigen Bauteile verwendet, die beim Bremsen auch den Haftwert ausnutzen. Es kann genau erkannt werden, an welcher Stelle eine Schiene glatt ist und daher an nur dieser Stelle gereinigt werden muss, was sofort erfolgen kann. Ein höherer Sicherheitsgewinn resultiert aus der Tatsache, dass durch die erfindungsgemäße Lösung eine glatte Schiene erkannt wird, bevor eine Bremsung einzuleiten ist. Weiterhin lassen sich durch Anwendung der erfindungsgemäßen Lösung über einen längeren Zeitraum und anschließender statistischer Auswertung darüber, welche Stellen der Schiene besonders gefährdet sind, Maßnahmen treffen, um einen die Bremsung beeinträchtigenden Schmierbelag zu vermeiden beispielsweise durch gezielte Baumrückschnitte.

Die erfindungsgemäße Lösung lässt sich bei Schienenfahrzeugen einsetzen, bei denen jedes Radpaar ein eigenes Antriebsaggregat besitzt oder eine Gruppe von Radpaaren mit einem Antriebsaggregat ausgerüstet ist. Daneben ist es jedoch auch denkbar, die unterschiedlich stark auf Radpaare aufgeteilte Antriebsleistung getriebetechnisch ausgehend von einem zentralen Antriebsaggregat zu erzeugen.

Zu unterschiedlich starken Verteilung der Antriebsleistung auf die angetriebenen Radpaare ist eine zentrale Steuereinheit vorgesehen, die die einzelnen Antriebsaggregate gemäß einer vorgegebenen Kraftverteilung ansteuert. Diese zentrale Steuereinheit kann auch Bestandteil der übergeordneten elektronischen Steuerung des Schienenfahrzeugs sein. Eine solche zentrale Steuereinheit bietet die Voraussetzung dafür, auf einfache Weise die vorgegebene Kraftverteilung zu festgelegten Zeitpunkten oder anhand definierter Ereignisse laufend durchzuwechseln. Hiermit wird ein ungleichmäßiger Verschleiß von relativ stärker angetriebenen Radpaaren und Antriebsaggregaten vermieden. Beispielsweise wäre es denkbar, die Leistungsverteilung einmal pro Minute zu ändern.

Gemäß einer weiteren die Erfindung verbessernden Maßnahme ist vorgesehen, dass Mittel zur Verhinderung eines Durchdrehens der relativ stärker angetriebenen Radpaare vorzusehen sind, um einen Schleuderschutz zu gewährleisten. Als geeignetes Mittel kommt beispielsweise ein allgemein bekanntes ABS-System in Betracht.

Als Mittel zur Überwachung des Haftwerts Rad-Schiene wird vorzugsweise ein ABS-Sensor verwendet, der einem Radpaar zugeordnet ist, so dass aus der hiermit ermittelten Raddrehzahl und den Antriebsdaten der Haftwert Rad-Schiene berechenbar ist. Alternativ hierzu ist es jedoch auch möglich, die Drehzahl des Antriebsaggregats diesbezüglich zu überwachen. Denn ein schlagartiges Ansteigen der Drehzahl bei nicht proportionalem Ansteigen der Beschleunigung des Schienenfahrzeuges deutet auf eine Verminderung des Haftwerts Rad-Schiene hin.

Gemäß einer weiteren die Erfindung verbessernden Maßnahme ist es vorgesehen, dass ein nach der vorstehend beschriebenen technischen Lösung erkannter Schmierbelag auf der Schiene mittels einer am Schienenfahrzeug angebrachten Magnetschienenbremse entfembar ist, indem diese auf die Schiene abgesenkt wird und mechanisch den Schmierbelag entfernt. Der Vorteil dieser Lösung besteht darin, dass ein ohnehin beim Schienenfahrzeug vorgesehenes Bauteil zwecks Schmierbelagentfernung zum Einsatz kommen kann, so dass ein weiterer gerätetechnischer Aufwand entbehrlich ist. Die Bremskraft, die für die Reinigung nötig ist, kann - wie Untersuchungen zeigten - durch das Antriebsaggregat leicht ausgeglichen werden, so dass das Schienenfahrzeug die Geschwindigkeit bei der Reinigung nicht vermindern muss.

Gemäß einer anderen die Erfindung verbessernden Maßnahme wird vorgeschlagen, dass ein nach der vorstehend vorgestellten technischen Lösung erkannter Schmierbelag auf der Schiene durch eine dem Schienenfahrzeug zugeordnete Kommunikationseinheit an nachfolgende Schienenfahrzeuge oder eine Betriebszentrale gemeldet wird. Als Kommunikationseinheit eignet sich beispielsweise der Zugfunk. Nachfolgende Schienenfahrzeuge können aufgrund dieser Warnung ihre Geschwindigkeit an die örtlichen Gegebenheiten anpassen.

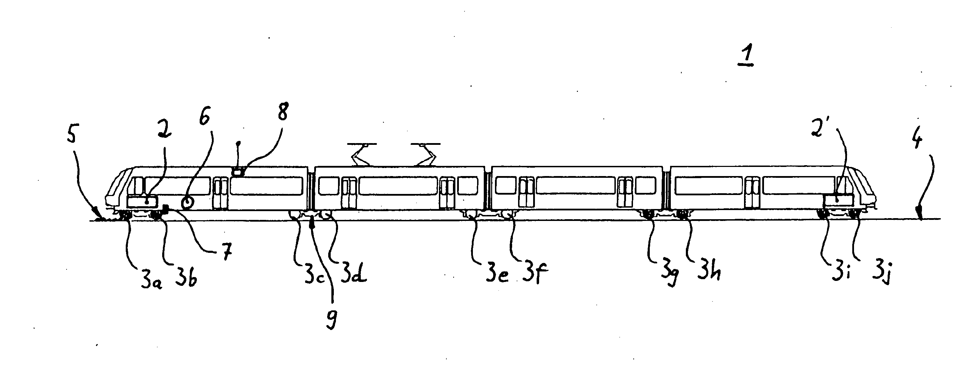

Weitere die Erfindung verbessernde Maßnahmen werden nachstehend gemeinsam mit der Beschreibung eines bevorzugten Ausführungsbeispiels der Erfindung anhand der einzigen Figur näher dargestellt. Die Figur zeigt eine schematische Darstellung eines Schienenfahrzeugs, das mit Mitteln zur Überwachung des Haftwerts Rad-Schiene ausgerüstet ist. Gemäß Figur besitze ein Schienenfahrzeug 1 ein auf mehreren Achsen angeordnete Radpaare 3a-3j, von denen jeweils zwei Radpaare 3a, 3b; 3c, 3d; 3e, 3f; 3g,3h; 3i, 3j an einem Drehgestell angebracht sind. Das Schienenfahrzeug 1 weist in diesem Ausführungsbeispiel zwei Antriebsaggregate 2 und 2' auf, welche jeweils endseitig des Schienenfahrzeugs angeordnet sind. Mit den Radpaaren 3a-3j läuft das Schienenfahrzeug 1 auf einer ortsfest angebrachten Schiene 4.

Den Radpaaren 3a und 3b ist das Antriebesaggregat 2 zugeordnet, wogegen den Radpaaren 3i und 3j das Antriebsaggregat 2' zugeordnet ist.

Auf der Schiene 4 befindet sich ein witterungsbedingter Schmierbelag 5, der einen geringen Haftwert Rad-Schiene verursacht und so die Bremsung des Schienenfahrzeuges 1 beeinträchtigt.

Beim Schienenfahrzeug 1 bewirkt eine zentrale Steuereinheit 6 eine vorgegebene Kraftverteilung der Antriebsaggregate 2, 2' an die hiervon angetriebenen Radpaare 3a-3j. Hierbei wird die von beiden Antriebsaggregaten 2, 2' erzeugte Antriebsleistung unterschiedlich stark auf die angetriebenen Radpaare 3a-3j verteilt. Bei zwei relativ stärker angetriebenen Radpaaren 3a und 3b sind Mittel zur Überwachung des Haftwerts Rad-Schiene vorgesehen, um den auf der Schiene 4 befindlichen und die Bremsung beeinträchtigenden Schmierbelag 5 zu erkennen. Zu diesem Zwecke misst ein an den verstärkt angetriebenen Radpaaren 3a, 3b angeordneter ABS-Sensor 7 die Raddrehzahl. Die Steuereinheit 6 ermittelt aus dem Drehzahlverlauf im Vergleich zum Fahrverhalten des Schienenfahrzeugs 1 den Haftwert Rad-Schiene und signalisiert, falls der Haftwert Rad-Schiene in einem Maße absinkt, dass eine Bremsung des Schienenfahrzeuges beeinträchtigt sein würde. Hierüber lässt sich auf das Vorhandensein des Schmierbelags 5 schließen, zu dessen Entfernen eine Magnetschienenbremse 9 zum Einsatz kommt, welche nach Maßgabe der Steuereinheit 6 auf die Schiene 4 abgesenkt wird, um den Schmierbelag 5 mechanisch zu beseitigen.

Daneben steht die Steuereinheit 6 auch mit einer Kommunikationseinheit 8 nach Art eines Zugfunks in Verbindung, welche einen unzulässig geringen Kraftwert Rad-Schiene an nachfolgende Schienenfahrzeuge meldet, um dem Schienenverkehr eine größere Sicherheit zu verleihen.

Die Erfindung beschränkt sich nicht auf das vorstehend beschriebene bevorzugte Ausführungsbeispiel. Es sind vielmehr Abwandlungen hiervon denkbar, welche vom Schutzbereich der nachfolgenden Ansprüche sind. So ist es beispielsweise auch denkbar, die Antriebsleistung auf andere Weise unterschiedlich start auf andere angetriebene Radpaare zu verteilen. Bei einem Schienenfahrzeug mit acht Achsen könnten bei gleichmäßig unbeschleunigter Fahrt beispielsweise zwei Achsen zu 100 % und die restlichen sechs Achse mit ca. nur 6 % angetrieben werden. Herkömmlicherweise werden bei ungleichmäßig unbeschleunigter Fahrt alle acht Achsen zu etwa 30 % angetrieben. Auch andere Verteilungen der Antriebsleistung sind im Rahmen der Erfindung denkbar, solange sich hieraus eine eindeutige Überwachung des Haftwerts Rad-Schiene ermitteln lässt.

### Bezugszeichenliste

- **1**: Schienefahrzeug
- **2**: Antriebsaggregat
- **3**: Radpaar
- **4**: Schiene
- **5**: Schmierbelag
- **6**: Steuereinheit
- **7**: ABS-Sensor
- **8**: Kommunikationseinheit
- **9**: Magnetschienenbremse

## Patentansprüche

1. Schienenfahrzeug mit mindestens einem Antriebsaggregat (2), das auf mehreren Achsen angeordnete Radpaare (3a - 3j) antreibt, die auf einer ortsfesten Schiene (4) laufen, wobei sich die von dem mindestens einen Antriebsaggregat (2) erzeugte Antriebsleistung unterschiedlich stark auf die angetriebenen Radpaare (3a - 3j) verteilt und wobei bei mindestens einem relativ stärker angetriebenen Radpaar (3a, 3b) Mittel zur Überwachung des Haftwerts Rad-Schiene vorgesehen sind, um einen auf der Schiene (4) befindlichen und die Bremsung beeinträchtigenden Schmierbelag (5) zu erkennen, wobei
zur unterschiedlich starken Verteilung der Antriebsleistung auf die angetriebenen Radpaare (3a- 3j) eine zentrale Steuereinheit (6) vorgesehen ist, die die einzelnen Antriebsaggregate (2, 2') gemäß einer vorgegebenen Kraftverteilung ansteuert,
**dadurch gekennzeichnet, dass**
die zentrale Steuereinheit (6) die vorgegebene Kraftverteilung zu festgelegten Zeitpunkten laufend durchwechselt, um einen gleichmäßigen Verschleiß von Radpaaren (3a, 3b; 3i, 3j) und Antriebsaggregaten (2, 2') zu erreichen.

2. Schienenfahrzeug nach einem der vorstehenden Ansprüche,
**dadurch gekennzeichnet, dass** zum Schleuderschutz Mittel zur Verhinderung eines Durchdrehens der relativ stärker angetriebenen Radpaare (3a, 3b) vorgesehen sind.

3. Schienenfahrzeug nach Anspruch 2,
**dadurch gekennzeichnet, dass** die Mittel zur Überwachung des Haftwerts Rad-Schiene einen am Radpaar (3a; 3b) angeordneten ABS-Sensor (7) umfassen.

4. Schienenfahrzeug nach einem der vorstehenden Ansprüche,
**dadurch gekennzeichnet, dass** ein auf einen örtlichen Schmierbelag (5) auf der Schiene (4) hindeutender unzulässig geringer Haftwert durch eine Kommunikationseinheit (8) an nachfolgende Schienenfahrzeuge meldbar ist.

5. Schienenfahrzeug nach einem der vorstehenden Ansprüche,
**dadurch gekennzeichnet, dass** zum Entfernen des Schmierbelags (5) auf der Schiene (4) eine Magnetschienenbremse (9) zum Einsatz kommt, welche sich nach Maßgabe der Steuereinheit (6) infolge eines erkannten Schmierbelags (5) auf die Schiene (4) absenkt.

## Claims

1. Rail vehicle comprising at least one driving unit (2) that drives pairs of wheels (3a - 3j) disposed on several axles, which run on a stationary rail (4), wherein the driving power generated by said at least one driving unit (2) is distributed among said driven pairs of wheels (3a - 3j) in different intensities and wherein means are provided for monitoring the adhesion value in friction between wheel and rail on at least one pair of wheels (3a, 3b) which are driven with a comparatively stronger power, in order to detect a greasy deposit (5) that is formed on said rail (4) and that impairs the braking effect, wherein a central controller (6) is provided for the distribution of the driving power in different intensities among the driven pairs of wheels (3a - 3j), which controls the individual driving units (2, 2') in correspondence with a predetermined distribution of force,
**characterised in that**
said central controller (6) changes the predetermined distribution of force continuously at predetermined points of time in order to achieve a homogeneous wear on pairs of wheels (3a, 3b; 3i, 3j) and driving units (2, 2').

2. Rail vehicle according to any of the preceding Claims,
**characterised in that** said means are provided for anti-skid action order to prevent the spinning of the comparatively more strongly driven pairs of wheels (3a, 3b).

3. Rail vehicle according to Claim 2,
**characterised in that** said means for monitoring the adhesion value in friction between wheel and rail comprise an ABS sensor (7) disposed on said pair of wheels (3a; 3b).

4. Rail vehicle according to any of the preceding Claims,
**characterised in that** an inadmissibly low friction value, which is a sign of a local greasy deposit (5) on said rail (4), can be communicated by means of a communication unit (8) to following rail vehicles.

5. Rail vehicle according to any of the preceding Claims,
**characterised in that** a magnetic rail brake (9) is applied for removal of said greasy deposit (5) on said rail (4), which is lowered onto said rail (4) as controlled by said controller (6) in response to a detected greasy deposit (5) on said rail (4).

## Revendications

1. Véhicule ferroviaire comprenant au moins un groupe d'entraînement (2) qui entraîne des paires de roues (3a - 3j) disposées aux plusieurs essieux, qui roulent sur un rail stationnaire (4), dans lequel la puissance de propulsion, qui est engendrée par ledit au moins one groupe d'entraînement (2), est distribuée parmi lesdites paires de roues entraînées (3a - 3j) aux intensités différentes et dans lequel des moyens sont disposés pour la surveillance du coefficient d'adhérence en frottement entre une roue et le rail à au moins une paire de roues (3a, 3b), qui sont entraînées à un effort relativement plus fort, afin de détecter un dépôt gras (5) formé sur ledit rail (4), qui prend de l'influence néfaste sur l'effet de freinage, dans lequel une unité centrale de commande (6) est disposée pour la distribution de la puissance de propulsion aux intensités différentes parmi les paires de roues entraînées (3a - 3j), qui commande les groupes d'entraînement individuels (2, 2') en correspondance avec une distribution prédéterminée de force motrice,
**caractérisé en ce**
**que** ladite unité centrale de commande (6) varie la distribution prédéterminée de force motrice en continu aux points de temps prédéterminés afin d'achever une usure homogènes aux paires de roues (3a, 3b; 3i, 3j) et aux groupes d'entraînement (2, 2').

2. Véhicule ferroviaire selon une quelconque des revendications précédentes,
**caractérisé en ce que** lesdits moyens sont envisagés pour une action antipatinage afin d'empêcher le patinage des paires de roues (3a, 3b) entraînées à propulsion relativement plus forte.

3. Véhicule ferroviaire selon la revendication 2,
**caractérisé en ce que** lesdits moyens pour la surveillance du coefficient d'adhérence en frottement entre une roue et le rail comprennent un détecteur antiblocage (7) disposé à ladite paire de roues (3a; 3b).

4. Véhicule ferroviaire selon une quelconque des revendications précédentes,
**caractérisé en ce qu'**il est possible de communiquer un petit coefficient d'adhérence inadmissible, qui est un indicateur d'un dépôt gras local (5) sur ledit rail (4), moyennant une unité de communication (8) aux véhicules ferroviaires suivants.

5. Véhicule ferroviaire selon une quelconque des revendications précédentes,
**caractérisé en ce qu'**un frein sur rail magnétique (9) est appliqué pour l'enlèvement dudit dépôt gras (5) sur ledit rail (4), qui est abaissé sur ledit rail (4) selon la commande par ladite unité de commande (6) en réponse à un dépôt gras (5) détecté sur ledit rail (4).
